# EUROPÄISCHE PATENTANMELDUNG

(11) **EP 0 688 811 A1**
(43) Veröffentlichungstag der Anmeldung: **27.12.1995**
(21) Anmeldenummer: 94109584.6
(22) Anmeldetag: 21.06.1994
(51) Int. Cl.: C08J 5/12, C09J 121/00

(54) **Verfahren zum Verbinden zweier Substrate mittels eines elastischen Haftvermittlers**

(71) Anmelder: KÄCHELE-CAMA LATEX GMBH, D-36124 Eichenzell (DE)
(72) Erfinder: Seyler, Andreas, D-36041 Fulda (DE); Weissenstein, Bernhard, D-36119 Neuhof - Hattenhofe (DE)
(74) Vertreter: Maiwald, Walter, Dr. Dipl.-Chem.

(57) **Zusammenfassung**

Die Erfindung betrifft ein Verfahren zum Verbinden zweier Substrate mittels eines elastischen Haftvermittlers, insbesondere unter Vulkanisation eines zwischen den Substraten vorgesehenen Haftvermittlers auf Gummi- bzw. Kautschukbasis. Als Haftvermittler dient erfindungsgemäß eine wäßrige Dispersion mit mindestens einer Latexkomponente. Von den Substraten ist üblicherweise wenigstens eines gummielastisch, während das andere weniger oder nur eingeschränkt elastisch sein kann. Der Haftvermittler wird in einem herkömmlichen Tauchverfahren aufgebracht und nachfolgend vulkanisiert. Die Erfindung betrifft auch als solche Haftvermittler verwendbare wäßrige Latexdispersionen sowie Produkte wie Fahrzeugreifen, Schläuche, Bahnmaterialien etc., die nach dem erfindungsgemäßen Verfahren hergestellt werden können.

## Beschreibung

Die Erfindung betrifft generell die Herstellung elastischer Teile aus wenigstens zwei miteinander verbundenen Strukturkomponenten. Spezieller betrifft die Erfindung ein Verfahren zum Verbinden zweier Substrate mittels eines elastischen Haftvermittlers, insbesondere unter Vulkanisation eines zwischen den Substraten vorgesehenen Haftvermittlers auf Gummi- bzw. Kautschukbasis, und eine zur Verwendung in diesem Verfahren geeignete wäßrige Latexdispersion. Außerdem betrifft die Erfindung unter Verwendung einer solchen wäßrigen Latexdispersion als Haftvermittler hergestellte Produkte wie Fahrzeugreifen, Dichtungen, Bahmmaterialien, Schläuche u. dgl.

Seit langem werden für verschiedenste Anwendungszwecke Gegenstände aus gummielastischen Materialien hergestellt, wobei einzelne Strukturelemente auch weniger oder gar nicht elastisch sein können. Ein Beispiel sind Autoreifen, die, je nach den späteren Beanspruchungsbedingungen, verschiedene deutlich voneinander unterscheidbare Elemente aus unterschiedlich harten Kautschuken und zusätzlich Gewebeeinlagen (Karkasse, Gürtel) und Drahteinlagen (Wulstbereich) aufweisen.

Ähnlich komplex aufgebaut sind z. B. Druckschläuche, bei denen eine Schlauchseele aus Gummi, synthetischem Kautschuk u. dgl. mit einer Schlauchdecke umgeben werden, die zwecks Aufnahme des Innendruckes eine, oft textile, Armierung enthält oder eine solche umgibt.

Ähnliche laminierte Produkte aus gummielastischen Materialien sind als Bahnmaterialien bekannt und vergleichbare Technologien finden auch bei der Herstellung von elastischen Dichtungen usw. Anwendung.

Oft werden zum Verbinden einzelner Lagen aus elastischem Material, insbesondere aus vulkanisierten bzw. vulkanisierbaren Materialien miteinander bzw. mit textilen Geweben sogenannte Gummilösungen eingesetzt. Dies spielt beispielsweise im Bereich der Schlauchfertigung eine große Rolle bei der Aufbringung von Schlauchdecken auf Schlauchseelen.

Bei diesen sogenannten Gummilösungen handelt es sich nicht um echte Lösungen, sondern um recht unscharf definierte Systeme aus in einem oder mehreren organischen Lösungsmitteln teilweise gelösten, teilweise gequollenen Festkautschuken.

Die Einbringung solcher Gummilösungen zwischen die zu verbindenden Lagen erfolgt üblicherweise nach einem Tauchverfahren. Dabei wird ein Substrat, beispielsweise eine Schlauchseele, durch einen offenen Behälter geführt, der die Gummilösung enthält, und dabei in diese eingetaucht. Nachfolgend wird das zweite Substrat, beispielsweise die Schlauchseele, auf das außen mit der Gummilösung beschichtete erste Substrat aufgebracht. Das Lösungsmittel wird dann verdampft und das aus den zwei Substraten mit dem dazwischen befindlichen Haftvermittler bestehende Produkt wird vulkanisiert. Dabei stellt sich eine Verbindung zwischen den beiden Substraten als Folge eines "Anlöseeffektes" durch das Lösungsmittel und oft wohl auch einer Phasengrenzreaktion mit dem Haftvermittler, also der Gummilösung, und den zugewandten Flächen der Substrate bei der Vulkanisation ein.

Solche Verfahren haben erhebliche Nachteile. Gummilösungen sind nicht sehr stabil und neigen zu Absetzerscheinungen. Wegen ihres komplexen physicochemischen Aufbaus sind Gummilösungen auch schwer homogen als Haftvermittler auftragbar. Die Haftung am Substrat ist nicht immer befriedigend.

Ein besonderes Problem ist der Gehalt von Gummilösungen an organischen Lösungsmitteln. Das Arbeiten mit solchen Lösungsmitteln ist immer problematisch hinsichtlich des Gesundheitsschutzes sowie des Brand- und Explosionsschutzes. Die Entsorgung organischer Lösungsmittel ist zunehmend staatlich reglementiert und aufwendig. Besonders problematisch ist bei den bekannten Tauchverfahren das Arbeiten in offenen Behältnissen, das zu einer starken Verdampfung und damit hoher Lösungsmittelkonzentration im Bereich der Behältnisse führt.

Es gibt im Stand der Technik viele Vorschläge für Haftvermittlersysteme für die Verbindung zweier Substrate, von denen wenigstens eines gummielastische Eigenschaften hat. Oft handelt es sich um sehr spezifische Systeme für ganz spezielle Substrate. Beispiele bilden die EP-A2 0 475 728, die einen speziellen Heißschmelzkleber zum Verkleben von EPDM-Kautschuken betrifft und die EP-A2 0 431 762, die einen Klebstoff zum Verbinden von Gummimaterialien mit metallenen Substraten offenbart. Ähnlicher Stand der Technik findet sich in der EP-A2 0 285 094, die einen Spezialklebstoff auf Basis eines Latex aus einem Nitrilgruppen enthaltenden hochgesättigten Kautschuk mit einer Jodzahl von nicht mehr als 120 und einem Resorzin-Formaldehydharz zur Verklebung eines Nitrilgruppen enthaltenden hochgesättigten Gummis mit Glasfasern oder organischen synthetischen Fasern offenbart.

Die EP-A1 0 158 750 beschreibt einen weiteren Klebstoff zum Kleben von vernetztem EPDM-Kautschuk.

Wäßrige Latices für die Behandlung von bestimmten Substraten sind ebenfalls beschrieben worden, so in der EP-A1 0 575 088.

Aufgabe der Erfindung ist es, ein Verfahren der eingangs genannten Art zur Verfügung zu stellen, das es ermöglicht, zwei Substrate, von denen wenigstens eines gummielastische Eigenschaften hat, mindestens genauso fest und stabil miteinander zu verbinden wie dies mit den bekannten Gummilösungen möglich ist, ohne jedoch Absetzprobleme und die mit dem Einsatz organischer Lösungsmittel verbundenen Nachteile in Kauf nehmen zu müssen.

Aufgabe der Erfindung ist es weiterhin, einen Haftvermittler zu schaffen, der sich als wenigstens vollwertiger Ersatz für die bekannten Gummilösungen eignet.

Weiterhin ist es Aufgabe der Erfindung, Produkte wie Fahrzeugreifen, Schläuche, Bahnmaterialien, Dichtungselemente u. dgl. zu schaffen, bei denen wenigstens zwei Substrate der bereits genannten Art ohne die Verwendung der bekannten Gummilösungen miteinander verbunden sind, wobei keine Qualitätsminderungen gegenüber bekannten solchen Produkten auftreten sollen, die unter Einsatz von Gummilösungen und ähnlichen lösungsmittelhaltigen Haftvermittlern gefertigt wurden.

Erfindungsgemäß dienen zur Lösung dieser Aufgaben die Gegenstände der hier beigefügten unabhängigen Ansprüche. Die beigefügten Unteransprüche definieren vorteilhafte Ausgestaltungen dieser erfindungsgemäßen Lösungen.

Die erfindungsgemäß als Haftvermittler eingesetzten wäßrigen Latexdispersionen enthalten keine organischen Lösungsmittel und können daher in den für die Verarbeitung von Gummilösungen schon vorhandenen Anlagen, einschließlich der meist verwendeten offenen Tauchbehälter, eingesetzt werden, wobei dennoch die mit dem Stand der Technik verbundenen Probleme des Entweichens organischer Lösungsmittel ausgeschaltet werden.

Die erfindungsgemäßen Latexdispersionen sind wesentlich stabiler als Gummilösungen und neigen nicht zu Absetzverhalten. Fehlproduktionen infolge von Absetzerscheinungen sind daher ausgeschlossen.

Die erfindungsgemäßen Latex-Haftvermittler lassen sich sowohl zum Verbinden zweier gummielastischer Substrate einsetzen als auch zum Verbinden eines gummielastischen Substrates mit einem Fasermaterial, wie beispielsweise einem Gewebe oder Gewirke aus textilem Garn, aus Draht o. dgl. So lassen sich die erfindungsgemäßen Haftvermittler einsetzen, um zwei Teile aus beispielsweise unterschiedlich hartem Kautschuk miteinander zu verbinden. Andererseits lassen sich die erfindungsgemäßen Haftvermittler verwenden, um beispielsweise eine textile Karkasse, einen Gürtel o. dgl. mit Kautschukteilen eines Fahrzeugreifens zu verbinden. In gleicher Form lassen sich die erfindungsgemäßen Haftvermittler zur Verbindung einer Schlauchdecke mit einer Schlauchseele einsetzen oder auch, in Form eines Übertauchverfahrens, zur Herstellung sogenannter Pionierschläuche, also deckenlose Schläuche mit einem Außengeflecht als textilem Druckträger.

Die erfindungsgemäßen Haftvermittler gewährleisten einen festen Verbund der Substrate. Sie sind üblicherweise ungefüllt und haben dadurch eine wesentlich höhere Elastizität in Verbindung mit deutlich besseren physikalisch/mechanischen Eigenschaften, im Vergleich mit dem Festkautschuk des Substrates. Sie sind in der Lage, die Filamente von gewirkten bzw. gewobenen Materialien untereinander zu verbinden und einen haltbaren Verbund zum benachbarten elastomeren Substrat zu schaffen.

Wenn die erfindungsgemäßen Haftvermittler wie bei den oben angesprochenen Pionierschläuchen für Übertauchsysteme eingesetzt werden, ermöglichen sie es, eine sonst erforderliche Schlauchdecke fortzulassen, was eine erhebliche Gewichtsersparnis bedeuten, wobei dennoch ein ausreichender chemischer und mechanischer Schutz des Schlauches gegenüber Einwirkungen von außen gewährleistet bleibt.

Bevorzugt werden für die erfindungsgemäßen Haftvermittler Latexdispersionen eingesetzt, die dem Festkautschuk des Substrates entsprechen. Beispielsweise werden NBR-Latexdispersionen für NBR-Festkautschuksubstrate verwendet, CR-Latexdispersionen auf CR-Festkautschuken usw. usw. Dies stellt sicher, daß die chemischen sowie physikalisch/mechanischen Eigenschaften des Haftvermittlers denen des Substrates möglichst weitgehend entsprechen und Zersetzungserscheinungen des Haftvermittlers ausgeschlossen werden können, wie sie im Stand der Technik gelegentlich vorkommen.

Es ist möglich, und wird bevorzugt, die Latexhaftvermittler der Erfindung so zu formulieren, daß die Haftung am Substrat durch eine Grenzflächenvulkanisation erzielt wird. Typische Vulkanisationssysteme umfassen wenigstens einen Vernetzer (beispielsweise Schwefel) oder sind mit vernetzungsfähigen Gruppen an den Hauptketten des zu vulkanisierenden Polymers ausgestattet. Typische solche vernetzungsfähige Gruppen sind Carboxylgruppen, so daß carboxylierte Latices zur Vernetzung keinen Schwefelzusatz benötigen. Weiterhin enthalten Vulkanisationssysteme typischerweise einen Vulkanisationsaktivator, meist ein Metalloxid wie Zinkoxid. Daneben können Beschleuniger, Netzmittel (zur Verringerung des Kontaktwinkels), Stabilisatoren, Alterungsschutzmittel, Verdickungsmittel, Klebrigmacher (wie beispielsweise Harzdispersionen), Pigmente u. dgl. vorhanden sein.

Befindet sich nun der Vernetzer und ggf. der Beschleuniger in der einen Komponente, hingegen der Aktivator in der anderen Komponente, die einander an der Grenzfläche berühren, so kann eine Vernetzungsreaktion über die Phasengrenzfläche hinweg stattfinden. Die Erfindung nutzt dies dadurch aus, daß bevorzugt die wäßrige Latexdispersion den Vernetzer, also beispielsweise Schwefel enthält, oder einen carboxylierten Latex umfaßt, aber nicht mit dem Vulkanisationsaktivator versehen ist. Dieser ist jedoch, meist in Form eines Metalloxids, im Festkautschuk wenigstens eines der Substrate enthalten. Dieser Aktivatorgehalt leitet dann, wenn das noch unvulkanisierte System aus zwei Substraten und wäßrigem Dispersions-Haftvermittler den Bedingungen einer Vulkanisationsreaktion unterworfen wird, die Reaktion zur Grenzflächenvulkanisation ein. Dies bewirkt, daß Substrat und vulkanisierter Haftvermittler an der Grenzfläche praktisch "zusammenwachsen", was eine extrem durable Verbindung von Substrat und Haftvermittler und damit zwischen den beiden Substraten ergibt.

Es versteht sich, daß ggf. die Aktivatorsubstanz im Haftvermittler, der Vernetzer- bzw. Beschleunigergehalt jedoch im Substrat vorgesehen sein kann.

Grundsätzlich wird ein bevorzugter erfindungsgemäßer Haftvermittler aus folgenden, per se im Handel erhältlichen Komponenten zusammengesetzt:
- wäßrige Latexdispersion, handelsüblich, entweder als nicht carboxylierte Polymerdispersion oder als carboxylierte Dispersion;
- Vernetzer, z. B. Schwefel, falls die Latexdispersion keine oder nicht genügend vernetzungsfähige Gruppen enthält;
- Beschleuniger (optional);
- Netzmittel;
- Stabilisatoren;
- Alterungsschutzmittel bzw. Antioxidanz;
- Pigmentdispersion zur Farbeinstellung;
- Verdickungsmittel zur Einstellung der Viskosität und
- Harzdispersion als Klebrigmacher.

Wie erkennbar, enthält diese für die meisten erfindungsgemäßen Einsatzzwecke bereits verwendbare Haftvermittler-Dispersion keinen Vulkanisationsaktivator.

Zur Herstellung eines erfindungsgemäßen Druckschlauches wird eine solche Dispersion, anstelle der im Stand der Technik verwendeten "Gummilösung" in den offenen Behälter einer im Stand der Technik bekannten Tauchanlage eingefüllt. Jetzt wird in bekannter Weise die Schlauchseele durch diesen Behälter geführt und überzieht sich dabei außenseitig mit der erfindungsgemäßen Dispersion. Nachfolgend wird, wiederum in bekannter Weise, die Schlauchdecke aufgebracht. Es folgt ein Vulkanisierungsschritt. Bei diesem bewirken die in den Kautschuken von Schlauchseele und/oder Schlauchdecke bereits vorhandenen Aktivatorverbindungen eine Grenzflächenvulkanisation der oben beschriebenen Art, die nach Abschluß der Vulkanisation zu einem festen Verbund von Schlauchseele, Haftvermittler und Schlauchdecke führen.

In einer abgewandelten Ausführungsform der Erfindung wird der Haftvermittler mit einem gewissen Gehalt an Aktivator, insbesondere Metalloxid wie etwa Zinkoxid, versehen, so daß die Aktivierung der Vulkanisation des Haftvermittlers nicht ausschließlich durch Aktivatorgehalt im Substrat bewirkt wird.

In einer weiteren abgewandelten Ausführungsform wird ein Pionierschlauch durch ein Übertauchverfahren erzeugt. Hierbei wird die Schlauchseele mit einem textilen Druckträger an ihrer Außenseite versehen, d. h. mit einem außenliegenden Geflecht aus textilem Garn überzogen. Eine Schlauchdecke wird nicht aufgebracht. Die Schlauchseele mit dem Außengeflecht wird durch Tauchen mit der erfindungsgemäßen Latexdispersion versehen, wobei man vorzugsweise eine geringere Menge Metalloxid einsetzen wird, um eine möglichst hohe Kohäsionskraft zu erreichen. Nach Vulkanisation bildet die Latexmischung einen festen Verbund der Fäden des textilen Druckträgers untereinander wie auch einen festen Verbund zum Kautschukmaterial der Schlauchseele.

In einer anderen Ausführungsform der Erfindung wird in ähnlicher Weise eine Textilkarkasse eines Fahrzeugreifens mit dem erfindungsgemäßen Haftvermittler getränkt und dann, vor der Vulkanisation des grünen Reifens, in üblicher Weise in dessen Aufbau integriert. Bei der nachfolgenden Vulkanisation des grünen Reifens vulkanisiert auch der Haftvermittler und schafft einen festen Verbund von Karkasse und diese kontaktierenden Kautschuksubstraten.

In ähnlicher Weise läßt sich der erfindungsgemäße Haftvermittler in weiteren abgewandelten Ausführungsformen der Erfindung zur Anbringung des Gürtels im Scheitelbereich des Reifens oder zur Anbringung von Laufflächen-Protektorkennzeichnungen u. dgl. einsetzen.

Bei den genannten Ausführungsbeispielen werden als handelsübliche Latexdispersionen vorzugsweise solche verwendet, die dem Substratkautschuk entsprechen. Es handelt sich also dann bei der vorstehenden Aufzeichnung um NBR-Latex für die Verwendung zusammen mit NBR-Festkautschuk, oder beispielsweise um CR-Latex für die Verwendung zusammen mit CR-Festkautschuk. Entsprechende Dispersionen sind dem Fachmann bekannt und im Handel erhältlich, wie auch die anderen genannten Bestandteile erfindungsgemäßer Dispersionen.

Es versteht sich, daß die Erfindung nicht auf die genannten Ausführungsbeispiele beschränkt ist; die Erfindung läßt sich mit Vorteil bei einer Vielzahl weiterer Produkte einsetzen, wie etwa bei der Herstellung mehrlagiger Elastomeren-Bahmmaterialien, bei Dichtungen aus unterschiedlichen Kautschuken mit und ohne Armierungseinlagen usw.

## Patentansprüche

1. Verfahren zum Verbinden zweier Substrate mittels eines elastischen Haftvermittlers, insbesondere unter Vulkanisation eines zwischen den Substraten vorgesehenen Haftvermittlers auf Gummi- bzw. Kautschukbasis,
dadurch gekennzeichnet, daß als Haftvermittler eine wäßrige Dispersion verwendet wird, die mindestens eine Latexkomponente umfaßt.

2. Verfahren nach Anspruch 1,
dadurch gekennzeichnet, daß wenigstens eines der Substrate teilweise oder ganz aus einem Gummi, einem synthetischen und/oder natürlichen Kautschuk o. dgl. besteht.

3. Verfahren nach Anspruch 1 oder 2,
dadurch gekennzeichnet, daß wenigstens eines der Substrate teilweise oder ganz aus einem Fasermaterial, insbesondere einem Gewebe oder Gewirke aus Garn, Draht o. dgl. besteht.

4. Verfahren nach einem der Ansprüche 1 bis 3,
dadurch gekennzeichnet, daß die Substrate Strukturbestandteile eines Fahrzeugreifens sind.

5. Verfahren nach einem der Ansprüche 1 bis 3,
dadurch gekennzeichnet, daß die Substrate Strukturbestandteile eines Schlauches, insbesondere eines Druckschlauches sind, wobei vorzugsweise ein Substrat eine Schlauchseele und das andere Substrat eine Schlauchdecke oder ein Außengeflecht aus einem textilen Druckträger bildet.

6. Verfahren nach einem der Ansprüche 1 bis 5,
dadurch gekennzeichnet, daß der Haftvermittler eine vorzugsweise carboxylierte Latexkomponente umfaßt, die einem Festkautschuk wenigstens eines Substrats entspricht.

7. Verfahren nach einem der Ansprüche 1 bis 6,
dadurch gekennzeichnet, daß der Haftvermittler nur einen Teil der Vulkanisationskomponenten, insbesondere die Vernetzer- und Beschleunigersubstanzen, und wenigstens ein Substrat die restlichen Vulkanisationskomponenten, insbesondere die Aktivatorsubstanz(en) wie Zinkoxid u. dgl. enthält.

8. Verfahren nach einem der Ansprüche 1 bis 7,
dadurch gekennzeichnet, daß der Haftvermittler in einem Tauchverfahren auf wenigstens eines der Substrate aufgebracht und in einem nachfolgenden Schritt vulkanisiert wird.

9. Verfahren nach einem der Ansprüche 1 bis 8,
dadurch gekennzeichnet, daß der Haftvermittler eine wäßrige Dispersion umfaßt, die eine oder mehrere vulkanisierbare Latexkomponenten sowie wahlweise in an sich bekannter Weise
- wenigstens einen Vulkanisationsvernetzer, insbesondere Schwefel oder einen Carboxylgruppengehalt im Polymer,
- wenigstens einen Vulkanisationsbeschleuniger,
- wenigstens ein Netzmittel,
- wenigstens einen Stabilisator,
- wenigstens ein Alterungsschutzmittel,
- wenigstens ein Verdickungsmittel,
- wenigstens einen Klebrigmacher, insbesondere eine Harzdispersion
sowie ggf. Farbstoffe und andere übliche Zusätze enthält.

10. Wäßrige Latexdispersion, insbesondere zur Verwendung in einem Verfahren gemäß einem der Ansprüche 1 bis 9, umfassend
- wenigstens eine vulkanisierbare Latexkomponente,
- wenigstens einen, jedoch nicht alle Reaktanden für die Vulkanisation, insbesondere wenigstens einen Vulkanisationsvernetzer, insbesondere Schwefel, einen Carboxylgruppengehalt im Polymer o. dgl. und ggf. wenigstens einen Beschleuniger, aber keinen Aktivator, oder wenigstens einen Aktivator, aber keinen Vernetzer und ggf. Beschleuniger;
sowie ggf. weitere bekannte Zusätze wie Netzmittel, Stabilisator, Alterungsschutzmittel, Verdickungsmittel, Klebrigmacher, Farbstoff u. dgl.

11. Fahrzeugreifen, insbesondere Luftreifen für Kraftfahrzeuge, Flugzeuge u. dgl. mit wenigstens zwei Substraten, insbesondere zwei Teilen aus unterschiedlichen Kautschuken und/oder einem Kautschukteil und einer Gewebe- oder Drahteinlage, insbesondere des Wulstes, der Karkasse und/oder des Gürtels,
dadurch gekennzeichnet, daß die Substrate durch Vulkanisation einer wäßrigen Latexdispersion miteinander verbunden sind.

12. Schlauch, insbesondere Druckschlauch mit Schlauchseele und Schlauchdecke sowie ggf. Armierungseinlage oder Pionierschlauch mit einem Außengeflecht, das als Druckträger eine Schlauchseele umgibt,
dadurch gekennzeichnet, daß die Schlauchseele mit der Schlauchdecke sowie ggf. der Armierungseinlage bzw. mit dem Außengeflecht durch einen vulkanisierten Haftvermittler auf Grundlage einer wäßrigen Latexdispersion, insbesondere gemäß dem Verfahren eines der Ansprüche 1 bis 9 verbunden ist.
